# EUROPEAN PATENT SPECIFICATION

(11) **EP 2 159 960 B1**
(45) Date of publication and mention of the grant of the patent: **17.08.2011**
(21) Application number: 08757746.6
(22) Date of filing: 17.06.2008
(51) Int. Cl.: H04L 12/26, H04L 12/14, H04L 12/24

(54) **BILLING TESTING METHOD AND BILLING DEVICE**
VERGEBÜHRUNGSPRÜFVERFAHREN UND VERGEBÜHRUNGSVORRICHTUNG
PROCÉDÉ DE TEST DE FACTURATION ET DISPOSITIF DE FACTURATION

(30) Priority: 08.08.2007 CN 200710075705
(43) Date of publication of application: 03.03.2010
(73) Proprietor: Huawei Technologies Co., Ltd., Longgang District, Shenzhen Guangdong 518129 (CN)
(72) Inventor: XU, Zhixian, Shenzhen Guangdong 518129 (CN); ZOU, Deliang, Shenzhen Guangdong 518129 (CN)
(74) Representative: Charles, Glyndwr
(86) International application number: PCT/CN2008/071335
(87) International publication number: WO 2009/018736

(56) References cited:
- WO-A1-98/57487
- CN-A- 1 409 514
- CN-A- 101 001 157
- DE-A1- 10 160 957
- JP-A- 02 219 354
- US-A- 5 802 156
- LI G., AND TANG J.: 'Timing Measurement for Local Billing' MODERN SCIENCE & TECHNOLOGY OF TELECOMMUNICATIONS no. 2, February 2004, pages 41 - 45

## Description

### Field of the Invention

The present invention relates to the communication field, and in particular, to a charging test technology.

### Background of the Invention

With the diversification of communication services, the communication charging system, also named as Billing System (BS) is more and more complex to fulfill the flexible tariff policies and tariff packages and the compatibility between the tariff packages.

Currently, the charging standards commonly applied by network operators include: time-based charging, traffic-based charging, and monthly flat rate.

Time-based charging means that a switch which controls the call connection records the number of the calling party and the number of the called party, and the start time and the end time of the conversation to generate a bill; and the BS performs charging according to the time recorded in the bill. Traffic-based charging means that a network management system records the data traffic on a port, and uses the data traffic as a basis for charging. Monthly flat rate means that an operator charges a user a fixed monthly fee according to the provided services, and that the monthly fee varies with the type of the service activated for the user.

In the existing communication network operation mode, if a new tariff needs to be added to the existing network, the correctness of the tariff of a new service is a top concern of the network operator. Therefore, it is essential to verify and test the correctness of the tariff of a new service.

When the tariff of a new service is under test, the charging resources of the existing network need to be shared with the existing network subscribers, and it is difficult for the BS to predict the correctness of the tariff of the new service. Therefore, from the perspective of the system security, the tariff of a new service is generally predicted through a set of standby devices or verification devices in addition to a set of dialing test devices. Specifically, the new service corresponding to the tariff is subscribed to on a standby device, and the tariff is validated in advance; and the dialing test device sends a charging request to verify whether the charging is correct on the standby device. After the verification succeeds, the new service and the corresponding tariff are imported into the existing network.

The method for predicting the tariff of a new service in the prior art has at least the following defects: A set of standby devices and dialing test devices need to be configured and maintained, thus leading to high costs; in the prediction process, the tariff of the new service is validated in advance, or the time of the dialing test device is adjusted to implement the verification, thus making the time control inflexible in the verification; the standby devices and dialing test devices used in the prediction may differ from the actual BS in the network, and consequently, the prediction result is different from the result generated after the new service is launched in the existing network, and the charging is incorrect after the new service and the tariff are applied to the existing network.

A DE application (DE 10160957 A1) discloses a method for entering and storing one or more tariffs for one or more products in an input database, The method includes forming a data record of real or fictitious telephony data, performing a test run by making telephone calls using the stored tariffs and the telephony data, determining resulting tariff and/or charge data, comparing with desired values and passing the tariffs into a production database following a positive result.

### Summary of the Invention

A method, as claimed in claim 1, and a charging device, as claimed in claim 7, are provided in the present invention so that a tariff rule to be validated in the future may be tested on the existing network device.

Compared with the prior art, the embodiments of the present invention bring the following benefits:
After a charging message is received, if the charged number in the received charging message is a test number, the charging time in the charging message is modified to be within the valid period of the tariff rule under test, namely, modified to a virtual time; the existing network device automatically locates the tariff rule under test according to the virtual time, and uses the tariff rule under test to perform charging for the message. Therefore, it is not necessary to maintain a set of standby test devices for testing the tariff rule which will be validated in the future, and the costs of purchasing and maintaining the devices are reduced. Moreover, because the test is performed on the existing network device directly, smooth transition of the tariff rule is achieved. The implementation of the test mode is convenient and flexible because the test mode does not need to validate the tariff rule under test in advance or adjust the time of the dialing test device.

### Brief Description of the Drawings

FIG. 1 is a flowchart of a charging test method in an embodiment of the present invention;
FIG. 2 is a flowchart of a charging test method in another embodiment of the present invention; and
Figure 3 shows a structure of a charging device in another embodiment of the present invention.

### Detailed Description of the Invention

To make the technical solution, objectives and merits of the present invention clearer, the following describes the embodiments of the present invention in detail with reference to accompanying drawings.

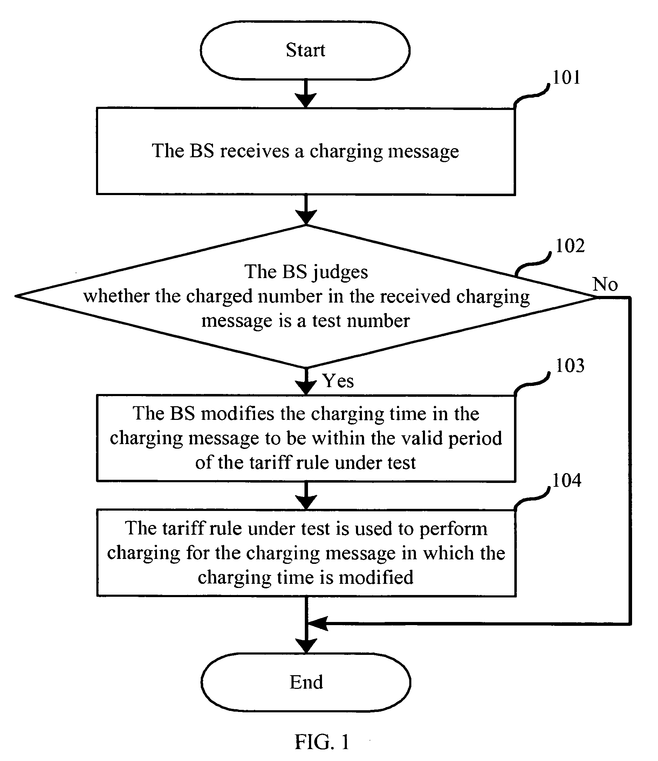

As shown in FIG. 1, a charging test method is provided in an embodiment of the present invention. In this embodiment, the correspondence between the tariff rule under test and the valid period of the tariff rule is stored beforehand.

In step 101, the BS receives a charging message which carries a charged number and charging time.

In step 102, the BS judges whether the charged number in the received charging message is a test number; if such is not the case, the process is ended; and, if such is the case, the process proceeds to step 103. For example, a test number set may be configured in the BS beforehand. If the charged number in the received charging message is included in the test number set, it is determined that the charged number is a test number, and the process proceeds to step 103.

In step 103, the BS modifies the charging time in the charging message to be within the valid period of the tariff rule under test.

In step 104, the tariff rule under test is used to perform charging for the charging message in which the charging time is modified. The charging time in the charging message is modified to a virtual time. The existing network device can automatically locate the tariff rule under test according to the virtual time, and use the tariff rule under test to perform charging for the message. Therefore, it is not necessary to maintain a set of standby test devices for testing the tariff rule which will be validated in the future, and the costs of purchasing and maintaining the devices are reduced. Moreover, because the test is performed on the existing network device directly, smooth transition of the tariff rule is achieved. The implementation of the test mode is convenient and flexible because the test mode does not need to validate the tariff rule under test in advance or adjust the time of the dialing test device. Moreover, this test is implemented in a real network environment in the prior art, and the real time scenario is simulated through setting of virtual time, thus bringing a vivid test effect and high accuracy.

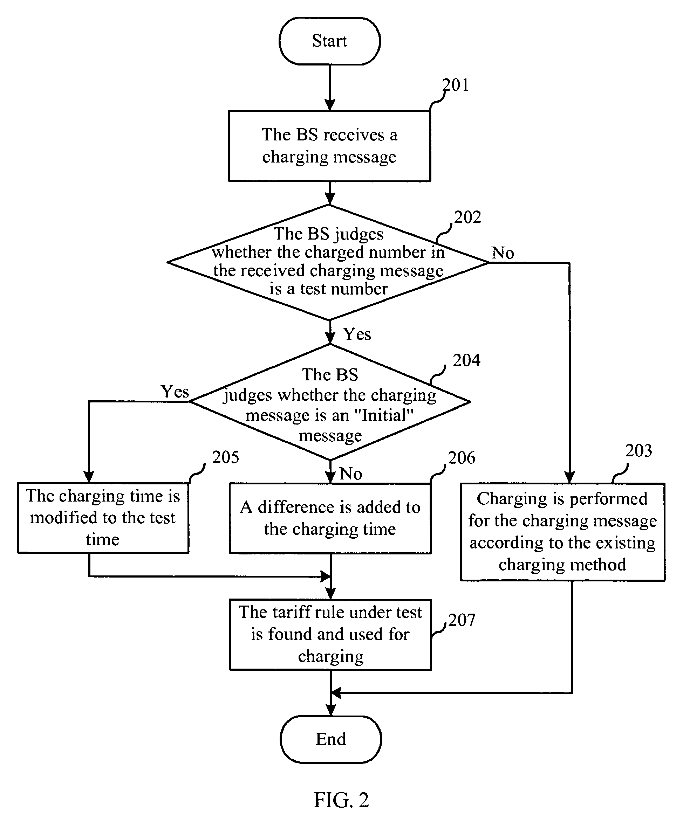

A charging test method is provided in another embodiment of the present invention. In this embodiment, the correspondence between the tariff rule under test and the valid period of the tariff rule needs to be stored beforehand. A test number set is configured in the BS of the existing network. The corresponding test time is configured for each test number in the test number set. The test time falls within the valid period of the tariff rule under test; that is, the test time is a virtual time. In this way, it is practicable to test whether the charging based on the tariff rule is accurate at different time in the future, and the covered time range is wider, and the test accuracy is higher. FIG. 2 shows a flowchart of the charging test method.

In step 201, the BS receives a charging message. Each charging message carries the following information: charged number, origin charging start time, also named "Event Origin Start Time", and origin charging end time, also named "Event Origin End Time". The origin charging start time and the origin charging end time are collectively called "charging time in the charging message".

In step 202, after receiving the charging message, the BS obtains the charged number from the message, and searches the test number set for the charged number carried in the charging message. In this way, the BS judges whether the charged number is a test number. This judgment mode is very simple and convenient. If the charged number is found in the test number set, it indicates that the charged number is a test number, and the process proceeds to step 204; otherwise, the process goes to step 203, in which the charging is performed for the charging message according to the charging method of the existing network.

In step 204, the BS judges whether the charging message is an "Initial" message. If such is the case, the process proceeds to step 205; otherwise, the process goes to step 206. Specifically, for a complete charging process, an "Initial" message needs to be sent to the BS at the beginning of the conversation; in the conversation process, an "Update" message may be sent to the BS periodically; and, at the end of the conversation, a "Terminate" message is sent to the BS. Therefore, the charging message received by the BS in step 204 may be any of the foregoing three messages. In this step, it is necessary to judge the received message to facilitate the subsequent operations.

In step 205: The charging message received by the BS is "Initial". In the preprocessing of the charging message, the BS modifies the origin charging start time of the charging message to the test time corresponding to the test number in the test number set, called virtual charging start time, also named "Event Charged Start Time". The BS calculates the difference between the origin charging start time prior to the modification and the virtual charging start time subsequent to the modification, and the difference is an test interval, also named "Event Test Interval". Afterward, the BS adds this difference to the origin charging end time to obtain the virtual charging end time, also named "Event Charged End Time". This time falls within the valid period of the tariff rule under test. Because different test time is configured in the test number set, the charging time in the charging message may be modified to different time within the valid period of the tariff rule under test, and the time control for the charging message is more flexible, and the test for the tariff rule is more comprehensive.

If the charging message is not "Initial" but another message subsequent to the "Initial" message, for example, "Update" and/or "Terminate", the process proceeds to step 206.

In step 206, in the process of preprocessing the charging message, the charging time in the charging message is modified to be within the valid period of the tariff rule under test, namely, modified to the virtual time, according to the difference calculated in step 205.

Specifically, the foregoing difference is added to the origin charging start time and the origin charging end time of the charging message to obtain the virtual charging start time and the virtual charging end time of the charging message. This mode simulates the time of receiving the charging message in a future conversation more vividly, and brings a more accurate test effect.

In step 207, the BS may calculate out the charging duration according to the virtual charging start time and the virtual charging end time of the charging message calculated in step 205 or step 206, search out the tariff rule under test from the correspondence according to the modified virtual charging start time, and performs charging for the charging message in this test according to the tariff rule under test and the charging duration. This test is implemented in a real network environment in the prior art, and the real time scenario is simulated through setting of virtual time, thus bringing a vivid test effect and high accuracy. Moreover, the existing network device automatically locates the tariff rule under test according to the virtual time, and uses the tariff rule under test to perform charging for the message. Therefore, it is not necessary to maintain a set of standby test devices for testing the tariff rule which will be validated in the future, and the costs of purchasing and maintaining the devices are reduced.

In this embodiment, after the system finishes processing the "Initial" message, "Update" message and "Terminate" message sent by the existing dialing test device, the online verification of the tariff of the future product is completed.

A charging test method is provided in another embodiment of the present invention. This charging test method is similar to that shown in FIG. 2, and differs in that: In the embodiment shown in FIG. 2, after receiving the "Initial" message, the BS calculates the difference between the origin charging start time prior to modification and the virtual charging start time subsequent to modification; after receiving the "Update" or "Terminate" message subsequently, the BS adds the difference to the origin charging start time and the origin charging end time of the two messages to obtain the virtual charging start time and the virtual charging end time. In this embodiment, however, the BS stores the virtual charging end time of the previous charging message; after receiving the next charging message, the BS uses the virtual charging end time of the previous charging message as the virtual charging start time of the next charging message directly, and calculates the difference between the virtual charging start time of the next message subsequent to modification and the origin charging start time prior to modification. The BS adds the difference to the origin charging end time of the charging message to obtain the virtual charging end time of the charging message. This BS repeats this process to obtain the virtual time of every charging message.

Specifically, after receiving the "Initial" message, the BS modifies its origin charging start time and origin charging end time in the way illustrated in FIG. 2, and stores the virtual charging end time subsequent to the modification. After receiving the second charging message which may be an "Update" or "Terminate" message, the BS assigns the stored value to the virtual charging start time of the second charging message to ensure that the virtual charging start time of the second charging message is equal to the virtual charging end time of the first charging message. Moreover, the BS calculates the difference between the origin charging start time of the second charging message and the virtual charging start time subsequent to modification, and then adds the difference to the origin charging end time of the second charging message to obtain the virtual charging end time of the second charging message. In this way, the virtual charging end time is stored, and is assigned to the virtual charging start time of the next charging message. This process is repeated. After the system finishes processing the "Initial" message, "Update" message and "Terminate" message sent by the existing dialing test device, the online verification of the tariff of the future product is completed.

The charging test in the embodiments of the present invention is implemented through processing of the "Initial", "Update" and "Terminate" messages sent by the existing dialing test device. Evidently, the charging test is performed on the existing network device, and smooth transition of the tariff rule is achieved. The implementation of the test mode is convenient and flexible because the test mode does not need to validate the tariff rule under test in advance or adjust the time of the dialing test device.

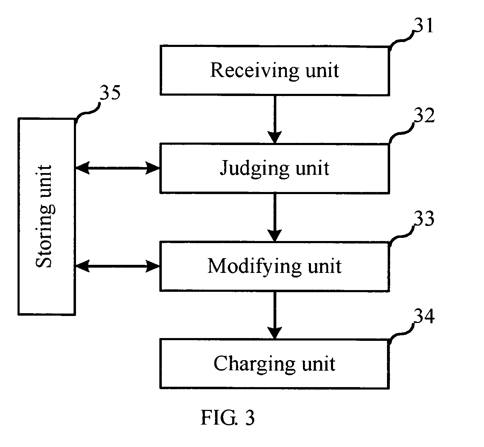

A charging device is provided in another embodiment of the present invention. As shown in FIG. 3, the charging device includes a receiving unit 31, a judging unit 32, a modifying unit 33, and a charging unit 34. First, the receiving unit 31 receives a charging message. The judging unit 32 judges whether the charged number in the charging message received by the receiving unit 31 is a test number. If the judging unit 32 determines that the charged number in the received charging message is a test number, the modifying unit 33 modifies the charging time in the charging message to be within the valid period of the tariff rule under test, namely, modifies the charging time to virtual time. Afterward, the charging device automatically locates the tariff rule under test according to the virtual time, and the charging unit 34 uses the tariff rule under test to perform charging for the charging message modified by the modifying unit 33. Therefore, it is not necessary to maintain a set of standby test devices for testing the tariff rule which will be validated in the future, and the costs of purchasing and maintaining the devices are reduced. Moreover, because the test is performed on the existing network device directly, smooth transition of the tariff rule is achieved. The implementation of the test mode is convenient and flexible because the test mode does not need to validate the tariff rule under test in advance or adjust the time of the dialing test device.

Moreover, the charging device further includes a storing unit 35 for storing the test number set and the test time corresponding to each test number in the test number set. The test time falls within the valid period of the tariff rule under test.

Specifically, the judging unit 32 judges whether the charged number in the charging message received by the receiving unit 31 is a number in the test number set stored by the storing unit 35. If such is the case, the judging unit determines that the charged number is a test number; otherwise, the judging unit determines that the charged number is not a test number. After the judging unit 32 determines that the charged number is a number in the test number set, the judging unit instructs the modifying unit 33 to modify the charging time of the charging message according to the test time corresponding to the test number in the test number set.

To sum up, in the embodiments of the present invention, which is defined by the scope of the appended claims, after a charging message is received, if the charged number in the received charging message is a test number, the charging time in the charging message is modified to be within the valid period of the tariff rule under test, namely, modified to virtual time; the existing network device automatically locates the tariff rule under test according to the virtual time, and uses the tariff rule under test to perform charging for the message. Therefore, it is not necessary to maintain a set of standby test devices for testing the tariff rule which will be validated in the future, and the costs of purchasing and maintaining the devices are reduced. Moreover, because the test is performed on the existing network device directly, smooth transition of the tariff rule is achieved. The implementation of the test mode is convenient and flexible because the test mode does not need to validate the tariff rule under test in advance or adjust the time of the dialing test device.

This test is implemented in a real network environment in the prior art, and the real time scenario is simulated through setting of virtual time, thus bringing a vivid test effect and high accuracy.

A test number set is set in the BS. If the charged number in the received charging message is included in the test number set, it is determined that the charged number is a test number. This mode is simple and convenient.

Each test number in the set corresponds to different test time. The test time falls within the valid period of the tariff rule under test. In this way, it is practicable to test whether the charging based on the tariff rule is accurate at different time in the future, and the covered time range is wider, and the test accuracy is higher.

## Claims

1. A method for charging using a tariff rule under test, the method comprising:
receiving a charging message (101) (201), the method being **characterised in that** the method further comprises the following steps: checking if a charged number in the received charging message is a test number (102) (202) , modifying the charging time in the charging message to be within the valid period of a tariff rule under test (103) (205), if the charged number in the received charging message is a test number (103) (205), and
using the tariff rule under test to perform charging for the charging message in which the charging time is modified (104) (207)

2. The method of claim 1, **characterized in** comprising:
configuring a test number set; and
determining that the charged number is a test number, if the charged number in the received charging message is included in the test number set.

3. The method of claim 2, **characterized in** comprising:
configuring a corresponding test time for each test number in the test number set, wherein the test time for each test number falls within the valid period of the tariff rule under test;
wherein, modifying the charging time in the charging message to be within the valid period of a tariff rule under test, further comprises: modifying the charging time in the charging message according to the corresponding test time of the test number in the test number set.

4. The method of claim 3, **characterized in that**,
the charging time comprises the charging start time and the charging end time;
wherein, modifying the charging time in the charging message according to the corresponding test time of the test number in the test number set, further comprises:
if the received charging message is an initial message, modifying the charging start time of the charging message to the test time corresponding to the test number in the test number set, adding a difference to the charging end time of the charging message, wherein the difference is between the origin charging start time in a charging message and the test time; and storing the modified charging end time.
if the received charging message is not an initial message, modifying the charging start time of the charging message to the stored charging end time, adding a difference to the charging end time of the charging message, wherein the difference is between the origin charging start time and the modified charging start time; and updating the stored charging end time.

5. The method of claim 1, **characterized in**, further comprising:
storing the correspondence between a tariff rule and a valid period of the tariff rule, wherein the stored tariff rule comprises the tariff rule under test;
wherein, using the tariff rule under test to perform charging for the charging message in which the charging time is modified, comprises:
searching out the tariff rule under test from the correspondence according to the modified charging time, and performing charging for the charging message in the test according to the tariff rule under test.

6. The method of any one of claims 1 to 5, **characterized in**,
performing the step of modifying the charging time in the charging message to be within the valid period of a tariff rule under test in the process of preprocessing the charging message.

7. A charging device, comprising:
a receiving unit (31), adapted to receive a charging message; the charging device being **characterised in that** it further comprises
a judging unit (32),adapted to judge whether a charged number in the charging message received by the receiving unit is a test number;
a modifying unit (33), adapted to modify the charging time in the charging message to be within the valid period of a tariff rule under test if the judging unit determines that the charged number is a test number; and
a charging unit (34), adapted to use the tariff rule under test to perform charging for the charging message modified by the modifying unit.

8. The charging device of claim 7, **characterized in** further comprising:
a storing unit, adapted to store a test number set,
wherein the judging unit is further adapted to judge whether the charged number in the charging message received by the receiving unit is a number in the test number set stored in the storing unit; if the charged number is in the test number set, the judging unit determines that the charged number is a test number; otherwise, the judging unit determines that the charged number is not a test number.

9. The charging device of claim 8, **characterized in that**, the storing unit is further adapted to store the test time corresponding to each test number in the test number set; the test time falls within the valid period of the tariff rule under test; and
the modifying unit is further adapted to modify the charging time of the charging message according to the test time corresponding to the test number in the test number set.

## Patentansprüche

1. Verfahren, um unter Verwendung einer zu testenden Tarifregel eine Belastung vorzunehmen, wobei das Verfahren Folgendes umfasst:
Empfangen einer Belastungsnachricht (101) (201), wobei das Verfahren **dadurch gekennzeichnet ist, dass** das Verfahren ferner die folgenden Schritte umfasst:
Prüfen, ob eine belastete Nummer in der empfangenen Belastungsnachricht eine Testnummer ist (102) (202), Modifizieren der Belastungszeit in der Belastungsnachricht, damit sie in der gültigen Periode einer zu testenden Tarifregel liegt (103) (205), falls die belastete Nummer in der empfangenen Belastungsnachricht eine Testnummer ist (103) (205), und
unter Verwendung der zu testenden Tarifregel Vornehmen der Belastung für die Belastungsnachricht, in der die Belastungszeit modifiziert ist (104) (207).

2. Verfahren nach Anspruch 1, **gekennzeichnet dadurch, dass** es Folgendes umfasst:
Konfigurieren einer Testnummernmenge; und
Bestimmen, dass die belastete Nummer eine Testnummer ist, falls die belastete Nummer in der empfangenen Belastungsnachricht in der Testnummernmenge enthalten ist.

3. Verfahren nach Anspruch 2, **gekennzeichnet dadurch, dass** es Folgendes umfasst:
Konfigurieren einer entsprechenden Testzeit für jede Testnummer in der Testnummernmenge, wobei die Testzeit für jede Testnummer in die gültige Periode der zu testenden Tarifregel fällt;
wobei das Modifizieren der Belastungszeit in der Belastungsnachricht, damit sie in der gültigen Periode einer zu testenden Tarifregel liegt, ferner Folgendes umfasst:
Modifizieren der Belastungszeit in der Belastungsnachricht in Übereinstimmung mit der entsprechenden Testzeit der Testnummer in der Testnummernmenge.

4. Verfahren nach Anspruch 3, **dadurch gekennzeichnet, dass**
die Belastungszeit die Belastungsstartzeit und die Belastungsendzeit umfasst;
wobei das Modifizieren der Belastungszeit in der Belastungsnachricht in Übereinstimmung mit der entsprechenden Testzeit der Testnummer in der Testnummernmenge ferner Folgendes umfasst:
falls die empfangene Belastungsnachricht eine anfängliche Nachricht ist, Modifizieren der Belastungsstartzeit der Belastungsnachricht auf die Testzeit, die der Testnummer in der Testnummernmenge entspricht, Addieren einer Differenz zu der Belastungsendzeit der Belastungsnachricht, wobei die Differenz zwischen der ursprünglichen Belastungsstartzeit in einer Belastungsnachricht und der Testzeit liegt;
und Speichern der modifizierten Belastungsendzeit,
falls die empfangene Belastungsnachricht keine anfängliche Nachricht ist, Modifizieren der Belastungsstartzeit der Belastungsnachricht auf die gespeicherte Belastungsendzeit, Addieren einer Differenz zu der Belastungsendzeit der Belastungsnachricht, wobei die Differenz zwischen der ursprünglichen Belastungsstartzeit und der modifizierten Belastungsstartzeit liegt; und Aktualisieren der gespeicherten Belastungsendzeit.

5. Verfahren nach Anspruch 1, **dadurch gekennzeichnet, dass** es ferner Folgendes umfasst:
Speichern der Entsprechung zwischen einer Tarifregel und einer gültigen Periode der Tarifregel, wobei die gespeicherte Tarifregel die zu testende Tarifregel umfasst;
wobei das Verwenden der zu testenden Tarifregel, um die Belastung für die Belastungsnachricht, in der die Belastungszeit modifiziert ist, vorzunehmen,
Folgendes umfasst:
Aussuchen der zu testenden Tarifregel aus der Entsprechung in Übereinstimmung mit der modifizierten Belastungszeit und Ausführen einer Belastung für die Belastungsnachricht im Test in Übereinstimmung mit der zu testenden Tarifregel.

6. Verfahren nach einem der Ansprüche 1 bis 5, **gekennzeichnet durch** Ausführen des Schrittes des Modifizierens der Belastungszeit in der Belastungsnachricht, damit sie in der gültigen Periode einer zu testenden Tarifregel liegt, im Prozess des Vorverarbeitens der Belastungsnachricht.

7. Belastungsvorrichtung, die Folgendes umfasst:
eine Empfangseinheit (31), die dazu ausgelegt ist, eine Belastungsnachricht zu empfangen; wobei die Belastungsvorrichtung **dadurch gekennzeichnet ist, dass** sie ferner Folgendes umfasst:
eine Beurteilungseinheit (32), die dazu ausgelegt ist, zu beurteilen, ob eine belastete Nummer in der von der Empfangseinheit empfangenen Belastungsnachricht eine Testnummer ist;
eine Modifizierungseinheit (33), die dazu ausgelegt ist, die Belastungszeit in der Belastungsnachricht zu modifizieren, damit sie in der gültigen Periode einer zu testenden Tarifregel liegt, falls die Beurteilungseinheit bestimmt, dass die belastete Nummer eine Testnummer ist; und
eine Belastungseinheit (34), die dazu ausgelegt ist, die zu testende Tarifregel zu verwenden, um eine Belastung für die durch die Modifizierungseinheit modifizierte Belastungsnachricht auszuführen.

8. Belastungsvorrichtung nach Anspruch 7, **dadurch gekennzeichnet, dass** sie ferner Folgendes umfasst:
eine Speichereinheit, die dazu ausgelegt ist, eine Testnummernmenge zu speichern, wobei die Beurteilungseinheit ferner dazu ausgelegt ist, zu beurteilen, ob die belastete Nummer in der von der Empfangseinheit empfangenen Belastungsnachricht eine Nummer in der Testnummernmenge ist, die in der Speichereinheit gespeichert ist; falls die belastete Nummer in der Testnummernmenge liegt, beurteilt die Beurteilungseinheit, dass die belastete Nummer eine Testnummer ist; andernfalls bestimmt die Beurteilungseinheit, dass die belastete Nummer keine Testnummer ist.

9. Belastungseinheit nach Anspruch 8, **dadurch gekennzeichnet, dass** die Speichereinheit ferner dazu ausgelegt ist, die Testzeit, die jeder Testnummer in der Testnummernmenge entspricht, zu speichern; wobei die Testzeit in die gültige Periode der zu testenden Tarifregel fällt; und
die Modifizierungseinheit ferner dazu ausgelegt ist, die Belastungszeit der Belastungsnachricht in Übereinstimmung mit der Testzeit, die der Testnummer in der Testnummernmenge entspricht, zu modifizierten.

## Revendications

1. Procédé de taxation utilisant un règlement tarifaire à l'essai, le procédé comprenant l'étape consistant à :
recevoir un message de taxation (101) (201),
le procédé étant **caractérisé en ce qu'**il comprend en outre les étapes consistant à :
vérifier si un numéro taxé dans le message de taxation reçu est un numéro d'essai (102) (202) ;
modifier l'heure de taxation dans le message de taxation de façon à ce qu'elle s'inscrive dans la période de validité d'un règlement tarifaire à l'essai (103) (205) si le numéro taxé dans le message de taxation reçu est un numéro d'essai (103) (205) ; et
utiliser le règlement tarifaire à l'essai pour appliquer la taxation pour le message de taxation dans lequel l'heure de taxation a été modifiée (104) (207).

2. Procédé selon la revendication 1, **caractérisé en ce qu'**il comprend les étapes consistant à :
configurer un groupe de numéros d'essai ; et
établir que le numéro taxé est un numéro d'essai si le numéro taxé dans le message de taxation reçu figure dans le groupe de numéros d'essai.

3. Procédé selon la revendication 2, **caractérisé en ce qu'**il comprend l'étape consistant à :
configurer une heure d'essai correspondante pour chaque numéro d'essai dans le groupe de numéros d'essai, l'heure d'essai pour chaque numéro d'essai s'inscrivant dans la période de validité du règlement tarifaire à l'essai ;
l'étape consistant à modifier l'heure de taxation dans le message de taxation pour qu'elle s'inscrive dans la période de validité d'un règlement tarifaire à l'essai comprenant en outre l'étape consistant à modifier l'heure de taxation dans le message de taxation compte tenu de l'heure d'essai correspondante du numéro d'essai dans le groupe de numéros d'essai.

4. Procédé selon la revendication 3, **caractérisé en ce que** :
l'heure de taxation comprend l'heure de début de taxation et l'heure de fin de taxation ;
l'étape consistant à modifier l'heure de taxation dans le message de taxation compte tenu de l'heure d'essai correspondante du numéro d'essai dans le groupe de numéros d'essai comprenant en outre les étapes consistant à :
si le message de taxation reçu est un message initial, modifier l'heure de début de taxation du message de taxation en la remplaçant par l'heure d'essai correspondant au numéro d'essai dans le groupe de numéros d'essai, ajouter une différence à l'heure de fin de taxation du message de taxation, la différence étant la différence entre l'heure de début de taxation d'origine dans un message de taxation et l'heure d'essai, et
mémoriser l'heure de fin de taxation modifiée ;
si le message de taxation reçu n'est pas un message initial, modifier l'heure de début de taxation du message de taxation en la remplaçant par l'heure de fin de taxation mémorisée, ajouter une différence à l'heure de fin de taxation du message de taxation,
la différence étant la différence entre l'heure de début de taxation d'origine et l'heure de début de taxation modifiée, et mettre à jour l'heure de fin de taxation mémorisée.

5. Procédé selon la revendication 1, **caractérisé en ce qu'**il comprend en outre l'étape consistant à :
mémoriser la correspondance entre un règlement tarifaire et une période de validité du règlement tarifaire, le règlement tarifaire mémorisé comprenant le règlement tarifaire à l'essai ;
l'étape consistant à utiliser le règlement tarifaire à l'essai pour appliquer la taxation pour le message de taxation dans lequel l'heure de taxation a été modifiée comprenant les étapes consistant à :
identifier le règlement tarifaire à l'essai à partir de la correspondance compte tenu de l'heure de taxation modifiée, et appliquer la taxation pour le message de taxation dans l'essai compte tenu du règlement tarifaire à l'essai.

6. Procédé selon l'une quelconque des revendications 1 à 5, **caractérisé en ce qu'**il comprend l'étape consistant à :
mettre en oeuvre l'étape consistant à modifier l'heure de taxation dans le message de taxation de façon à ce qu'elle s'inscrive dans la période de validité d'un règlement tarifaire à l'essai au cours d'un prétraitement du message de taxation.

7. Dispositif de taxation, comprenant :
une unité de réception (31), conçue pour recevoir un message de taxation ;
le dispositif de taxation étant **caractérisé en ce qu'**il comprend en outre :
une unité d'évaluation (32), conçue pour évaluer si un numéro taxé dans le message de taxation reçu par l'unité de réception est ou non un numéro d'essai ;
une unité de modification (33), conçue pour modifier l'heure de taxation dans le message de taxation pour qu'elle s'inscrive dans la période de validité d'un règlement tarifaire à l'essai si l'unité d'évaluation établit que le numéro taxé est un numéro à l'essai ; et
une unité de taxation (34), conçue pour utiliser le règlement tarifaire à l'essai pour appliquer la taxation pour le message de taxation modifié par l'unité de modification.

8. Dispositif de taxation selon la revendication 7, **caractérisé en ce qu'**il comprend en outre :
une unité de mémorisation, conçue pour mémoriser un groupe de numéros d'essai ;
l'unité d'évaluation étant en outre conçue pour évaluer si le numéro taxé dans le message de taxation reçu par l'unité de réception est ou non un numéro figurant dans le groupe de numéros d'essai mémorisé dans l'unité de mémorisation ; et si le numéro taxé figure dans le groupe de numéros d'essai, l'unité d'évaluation établissant que le numéro taxé est un numéro d'essai et, dans le cas contraire, l'unité d'évaluation établissant que le numéro taxé n'est pas un numéro d'essai.

9. Dispositif de taxation selon la revendication 8, **caractérisé en ce que** :
l'unité de mémorisation est en outre conçue pour mémoriser l'heure d'essai correspondant à chaque numéro d'essai dans le groupe de numéros d'essai, l'heure d'essai s'inscrivant dans la période de validité du règlement tarifaire à l'essai ; et
l'unité de modification est en outre conçue pour modifier l'heure de taxation du message de taxation compte tenu de l'heure d'essai correspondant au numéro d'essai dans le groupe de numéros d'essai.
